(19) Europäisches Patentamt
European Patent Office
Office européen des brevets

(11) **EP 3 500 914 B1**

(12) **FASCICULE DE BREVET EUROPEEN**

(45) Date de publication et mention
de la délivrance du brevet:
**08.09.2021 Bulletin 2021/36**

(51) Int Cl.:
*G06F 3/038* [(2013.01)]     *G06F 3/0338* [(2013.01)]
*A63F 13/20* [(2014.01)]     *A63F 13/22* [(2014.01)]
*A63F 13/42* [(2014.01)]

(21) Numéro de dépôt: **17755478.9**

(22) Date de dépôt: **17.08.2017**

(86) Numéro de dépôt international:
**PCT/EP2017/070812**

(87) Numéro de publication internationale:
**WO 2018/033590 (22.02.2018 Gazette 2018/08)**

(54) **PROCÉDÉ DE CONTRÔLE D'UN ÉLÉMENT D'AFFICHAGE PAR UNE CONSOLE DE JEUX**

VERFAHREN ZUR KONTROLLE EINES ANZEIGEELEMENTS ÜBER EINE SPIELKONSOLE

METHOD FOR CONTROLLING A DISPLAY ELEMENT BY A GAME CONSOLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.08.2016 EP 16185052**

(43) Date de publication de la demande:
**26.06.2019 Bulletin 2019/26**

(73) Titulaire: **Bigben Interactive**
**59273 Fretin (FR)**

(72) Inventeurs:
• **FALC, Alain**
**8500 Kortrijk (BE)**
• **ALLAERT, Yannick**
**62410 Meurchin (FR)**
• **NOTEBAERT, Alexandre**
**59200 Tourcoing (FR)**
• **DUDOYER, Stephen**
**59810 Lesquin (FR)**

(74) Mandataire: **Poindron, Cyrille et al**
**Novagraaf International SA**
**Chemin de l'Echo 3**
**1213 Onex (CH)**

(56) Documents cités:
**EP-A1- 0 823 271**

**Description**

La présente invention concerne de manière générale un procédé de contrôle d'un élément d'affichage généré sur un écran d'affichage par une console de jeux vidéo accouplée à un contrôleur de jeux. En particulier, l'invention concerne le contrôle de l'élément d'affichage lorsque le contrôleur de jeux comprend un levier ou un joystick déplacé par un utilisateur pour commander la position et/ou le déplacement de l'élément d'affichage qui peut être un curseur de visée ou une scène vue par un avatar de l'utilisateur, depuis une position dans le jeu ou un poste de pilotage par exemple.

Il est connu dans l'art antérieur d'utiliser aussi bien un système de coordonnées selon un repère cartésien que polaire pour gérer la mesure de la position du levier, tel que le divulgue le document EP2450776A1. Cependant, il est souvent nécessaire de toujours envoyer à la console de jeu des coordonnées selon un système de coordonnées cartésien, en raison du format standardisé pour la console de jeux. Par ailleurs, le document EP 0 823 271 A1 décrit une méthode dans laquelle des premières et deuxièmes coordonnées d'un levier de manette de jeu sont transformées en troisièmes et quatrièmes coordonnées avec des coefficients différents.

Il est de pratique commune de projeter les positions mesurées dans un plan de base (qui peut par exemple être perpendiculaire au levier lorsque ce dernier est en position de repos, par exemple verticale). Dans le cas où le levier peut évoluer dans une zone de déplacement limitée par une butée mécanique (telle qu'un cercle, un hexagone ou autre polygone, une forme quelconque ou encore une ellipse), il est fréquent d'envoyer à la console un signal pleine échelle lorsque le levier est en butée et selon l'une des diagonales du plan de base, et de ne pas augmenter ce signal lorsque le levier passe dans les zones de quartier de cercle au-delà des bords d'un carré inscrit dans une projection de la butée mécanique, et ayant ses sommets sur les diagonales précitées.

La zone de déplacement prédéterminée du levier est définie comme étant une zone de l'espace dans laquelle le levier peut se déplacer avant d'entrer en butée avec par exemple le boîtier du contrôleur de jeu. Comme cela est connu, cette butée peut être un cercle ou un polygone, tel qu'un octogone ou un hexagone ou même une ellipse par exemple.

En conséquence, ce mode de gestion aboutit à une limitation de la zone de déplacement (qui a une forme projetée en forme de cercle, hexagone ou autre polygone, une forme quelconque ou encore une ellipse) à une zone de mesure effective (qui est le carré inscrit dans le cercle projeté).

Un but de la présente invention est de répondre aux inconvénients du document de l'art antérieur mentionnés ci-dessus et en particulier, tout d'abord, de proposer un procédé de contrôle d'une position et/ou d'un déplacement d'un élément d'affichage généré sur un écran d'affichage par une console de jeux vidéo accouplée à un contrôleur de jeux comprenant un levier de commande agencé pour être déplacé selon au moins deux degrés de liberté dans une zone déterminée par un utilisateur, qui exploite toute la zone de déplacement du levier de commande, tout en envoyant des coordonnées cartésiennes à la console de jeux.

Pour cela un premier aspect de l'invention concerne un procédé de contrôle d'une position et/ou d'un déplacement d'un élément d'affichage généré sur un écran d'affichage par une console de jeux vidéo accouplée à un contrôleur de jeux comprenant un levier de commande agencé pour être déplacé selon au moins deux degrés de liberté dans une zone déterminée par un utilisateur, le procédé comprenant les étapes consistant à :

- mesurer une position du levier de commande dans la zone déterminée avec au moins un capteur donnant en sortie au moins un signal électrique par degré de liberté,
- projeter dans un plan de base la position du levier de commande mesurée avec ledit au moins un capteur, pour déterminer un premier jeu de coordonnées,
- déterminer un cercle de positions, centré sur une position de repos du levier de commande et passant par la position projetée du levier de commande dans le plan de base,
- déterminer un carré circonscrit au cercle de positions,
- projeter sur le carré circonscrit au moins une coordonnée du premier jeu de coordonnées,
- calculer un deuxième jeu de coordonnées dans un repère cartésien, sur la base de la projection de ladite au moins une coordonnée du premier jeu de coordonnées sur le carré circonscrit, de sorte à pouvoir envoyer à la console le deuxième jeu de coordonnées cartésiennes qui est une image du premier jeu de coordonnées.

Le procédé selon la mise en œuvre ci-dessus comprend une étape qui permet de définir un carré circonscrit au cercle de positions (c'est-à-dire un carré qui entoure le cercle de positions, et dont les côtés sont chacun tangents au cercle de positions), ce qui offre la possibilité d'effectuer une projection sur l'un des côtés du carré circonscrit de la position projetée dans le plan de base. Cette deuxième projection permet de passer d'une position projetée qui est sur le cercle de positions à une deuxième position projetée (définie par la projection d'au moins une des coordonnées de la position projetée) qui se trouve pour sa part sur le carré circonscrit. Ceci permet de définir aisément des coordonnées cartésiennes, et même lorsque le levier de commande se trouve en butée mécanique sur une butée mécanique de forme circulaire, hexagonale ou polygonale, une forme quelconque ou encore elliptique, on obtient naturellement des coordonnées qui sont sur le carré circonscrit au plus grand cercle de positions possible (car le levier de commande est en butée mécanique). Pour les positions du levier où la projection appartient au cercle de positions et au carré circonscrit, la transformation ne change pas les coordonnées, mais pour toutes les autres positions, la méthode revient à allonger la norme du vecteur de position (avec la projection sur le carré circonscrit), pour obtenir des coordonnées sur un carré.

En conséquence, la projection sur le carré circonscrit permet de définir un deuxième point de position (ayant pour coordonnées le deuxième jeu de coordonnées) qui permet de construire un deuxième vecteur entre l'origine (la position de repos) et le deuxième point dont la norme est plus grande ou égale que la norme d'un premier vecteur construit entre l'origine et la position projetée dans le plan de base. Les normes seront égales uniquement si le levier de commande se trouve déplacé sur une direction cardinale, et partout ailleurs, la norme du deuxième vecteur sera plus grande que la norme du premier vecteur.

Il est à noter que lorsque le levier de commande est déplacé selon un axe cardinal (c'est-à-dire uniquement verticalement ou horizontalement, ou encore uniquement en abscisse ou uniquement en ordonnée), alors il n'y a aucune modification des coordonnées car le cercle de positions est tangent au carré circonscrit. En corollaire, lorsque le levier de commande est déplacé partout ailleurs que selon un axe cardinal ou sur un point où la position projetée appartient au cercle de positions et au carré circonscrit, la projection sur le carré circonscrit revient à augmenter ou allonger l'une des coordonnées mesurées, pour définir le deuxième jeu de coordonnées cartésiennes.

De plus, le levier peut être monté en liaison rotule à doigt par rapport au contrôleur de jeu, c'est-à-dire qu'il est mobile selon deux rotations, mais pas en translation ni selon une troisième rotation (généralement autour du levier). Cependant, le procédé s'applique aussi à un levier qui est mobile selon deux translations dans un plan, et qui est bloqué selon les trois rotations et une translation. Comme indiqué, il suffit que le levier soit mobile selon deux degrés de liberté pour pouvoir appliquer la méthode objet de l'invention.

Par ailleurs, la projection dans le plan de base est avantageusement une projection orthogonale par rapport au plan de base, mais on peut envisager une projection oblique, c'est-à-dire que la direction de projection n'est pas perpendiculaire au plan de base, mais inclinée (au moins de quelques degrés par exemple) par rapport au plan de base. En d'autres termes, le plan de base peut être perpendiculaire au levier lorsque ce dernier est en position de repos, mais cela n'est pas nécessaire pour mettre en œuvre la méthode objet de l'invention. Cependant, il faut veiller à conserver une bonne résolution, si bien que la direction de projection ne sera pas inclinée de plus de 20° par exemple par rapport au plan de base. Cela revient à effectuer une projection dans un plan de base qui n'est pas perpendiculaire au levier de commande dans sa position de repos.

Avantageusement, l'étape de projection de ladite au moins une coordonnée du premier jeu de coordonnées sur le carré circonscrit comprend une étape consistant à déterminer un point de position projetée comme étant un point d'intersection d'un axe portant un rayon du cercle de positions, passant par la position projetée, avec le carré circonscrit. En d'autres termes, la position projetée est à nouveau projetée selon la direction du rayon qui définit l'une des coordonnées d'un système de coordonnées polaires ou cylindriques (la distance à l'origine).

Selon la méthode préférée, l'étape de projection de ladite au moins une coordonnée du premier jeu de coordonnées sur le carré circonscrit comprend une étape consistant à projeter sur le carré circonscrit la position projetée, selon une direction de projection définie par un rayon du cercle de positions, passant par la position projetée.

Avantageusement, l'étape de calcul du deuxième jeu de coordonnées cartésiennes comprend :

- une étape consistant à calculer une première longueur comme étant une longueur d'un segment reliant le centre du cercle de positions à la position projetée,
- une étape consistant à calculer une deuxième longueur comme étant une longueur d'un segment reliant le centre du cercle de positions au point de position projetée (se trouvant sur le carré circonscrit),
- une étape consistant à multiplier chaque coordonnée du premier jeu de coordonnée par un facteur défini par un ratio de la deuxième longueur sur la première longueur. Le premier jeu de coordonnées est selon le système cartésien, et la dernière étape de cette mise en œuvre revient à effectuer une homothétie sur chaque coordonnée du premier jeu de coordonnées. Le rapport d'homothétie est supérieur ou égal à 1, et est égal au rapport de la distance à l'origine du point de position projetée (appartenant au carré circonscrit) sur la distance à l'origine de la position projetée (appartenant au cercle de positions). Le rapport d'homothétie n'est égal à 1 que lorsque le levier de commande est déplacé selon une direction cardinale ou dans une position où la position projetée appartient simultanément au cercle de positions et au carré circonscrit. Dans tous les autres cas, il est supérieur à 1. Dans le cas d'une butée mécanique circulaire, le rapport est maximal lorsque le levier de commande est sur une diagonale, il est égal à la racine carrée de 2 (environ 1.414).

Selon une première alternative, l'étape de projection de ladite au moins une coordonnée du premier jeu de coordonnées sur le carré circonscrit comprend au moins une étape consistant à projeter la position projetée sur le carré circonscrit, selon une direction de projection définie par un axe d'un repère orthonormé.

Selon un cas particulier de la première alternative, l'étape de projection de ladite au moins une coordonnée du premier jeu de coordonnées sur le carré circonscrit comprend :

- une seule étape consistant à projeter sur le carré circonscrit la position projetée, selon une première direction de projection définie par un axe d'un repère orthonormé définissant la plus courte distance entre la position projetée et le carré circonscrit, pour définir un point de projection unique. Cette méthode évite de calculer des coefficients de conversion, ce qui permet de rapidement transmettre le deuxième jeu de coordonnées.

Avantageusement, le deuxième jeu de coordonnées cartésiennes est défini par les coordonnées cartésiennes du point de projection unique.

En deuxième alternative, l'invention concerne un procédé de contrôle d'une position et/ou d'un déplacement d'un élément d'affichage généré sur un écran d'affichage par une console de jeux vidéo accouplée à un contrôleur de jeux comprenant un levier de commande agencé pour être déplacé selon au moins deux degrés de liberté dans une zone déterminée par un utilisateur, le procédé, comprenant les étapes consistant à :

- mesurer une position du levier de commande dans la zone déterminée avec au moins un capteur donnant en sortie au moins un signal électrique par degré de liberté,
- projeter dans un plan de base la position du levier de commande mesurée avec ledit au moins un capteur, pour déterminer un premier jeu de coordonnées,
- déterminer un secteur angulaire comprenant la position projetée du levier de commande, parmi une pluralité de secteurs angulaires prédéfinis du plan de base, chaque secteur angulaire comprenant au moins un point de référence par lequel passe un cercle de référence centré sur une position de repos du levier de commande,
- déterminer un carré de référence circonscrit au cercle de référence du secteur angulaire déterminé (comprenant la position projetée),
- déterminer au moins un coefficient multiplicateur défini en fonction du secteur angulaire déterminé sur la base d'une projection du point de référence sur le carré de référence circonscrit, ,
- calculer un deuxième jeu de coordonnées en multipliant chaque coordonnée du premier jeu de coordonnées avec ledit au moins un coefficient multiplicateur, de sorte à pouvoir envoyer à la console le deuxième jeu de coordonnées cartésiennes qui est une image du premier jeu de coordonnées. Le procédé selon cette mise en œuvre utilise toujours une projection d'un cercle de référence vers un carré circonscrit, mais pour déterminer un coefficient multiplicateur valable pour un ensemble de points réunis dans un même secteur angulaire. En d'autres termes, la conversion est faite par lot de points. Toutefois, de la même manière que pour le premier aspect, on passe par une projection d'un point de référence faisant partie d'un cercle pour définir un deuxième point projeté faisant partie d'un carré circonscrit au cercle.

Ici encore, le procédé permet de définir un deuxième point de position (ayant pour coordonnées le deuxième jeu de coordonnées) qui permet de construire un deuxième vecteur entre l'origine (la position de repos) et le deuxième point de position dont la norme est plus grande ou égale que la norme d'un premier vecteur construit entre l'origine et la position projetée dans le plan de base. Les normes seront égales uniquement si le levier de commande se trouve déplacé sur une direction cardinale ou dans une position où la position projetée appartient simultanément au cercle de positions et au carré circonscrit, et partout ailleurs, la norme du deuxième vecteur sera plus grande que la norme du premier vecteur.

Avantageusement, chaque secteur angulaire de la pluralité de secteurs angulaires prédéfinis est défini par l'intersection de deux droites passant par la position de repos avec deux cercles centrés sur la position de repos, de sorte à découper et couvrir toute la surface des projections possibles de la position du levier de commande dans le plan de base. En d'autres termes, chaque secteur angulaire est une portion de couronne ou un quartier de disque. On peut envisager de segmenter plus la partition ou segmentation dans les zones éloignées de la position de repos, pour garder une même précision de calcul.

Avantageusement, les étapes consistant à déterminer le cercle de positions, déterminer le carré circonscrit au cercle de positions, projeter sur le carré circonscrit ladite au moins une coordonnée, et à calculer le deuxième jeu de coordonnées dans un repère cartésien (selon la mise en œuvre préférée, la première alternative ou la deuxième alternative) sont effectuées de manière préalable pour toutes les positions projetées possibles du levier de commande dans le plan de base, de sorte à définir une table prédéfinie de conversion du premier jeu de coordonnées vers le deuxième jeu de coordonnées. Autrement dit, les étapes liées à la projection sont effectuées préalablement à l'utilisation du contrôleur de jeux, pour créer une table prédéfinie de conversion qui est stockée dans des moyens de stockage informatique du contrôleur de jeux. En conséquence, les calculs sont limités lors de l'utilisation du contrôleur de jeux.

Avantageusement, ladite table prédéfinie de conversion comprend en entrée le premier jeu de coordonnées, et donne en sortie un coefficient à multiplier avec chaque coordonnée du premier jeu de coordonnées, pour calculer le deuxième jeu de coordonnées. Les calculs se limitent à multiplier le premier jeu de coordonnées avec le coefficient.

Avantageusement, ladite table prédéfinie de conversion comprend en entrée le premier jeu de coordonnées, et donne en sortie le deuxième jeu de coordonnées

Autrement dit, les étapes consistant à déterminer le cercle de positions, déterminer le carré circonscrit au cercle de positions, projeter sur le carré circonscrit ladite au moins une coordonnée, et à calculer le deuxième jeu de coordonnées dans un repère cartésien sont effectuées en utilisant une table prédéfinie de conversion,

ladite table prédéfinie de conversion comprenant en entrée le premier jeu de coordonnées, et donnant en sortie un coefficient à multiplier avec chaque coordonnée du premier jeu de coordonnées, pour calculer le deuxième jeu de coordonnées.

Avantageusement, le procédé de contrôle comprend une étape consistant à envoyer à la console de jeu le deuxième jeu de coordonnées cartésiennes.

Avantageusement, la position et/ou le déplacement de l'élément d'affichage généré sur l'écran d'affichage est modifié sur la base du deuxième jeu de coordonnées cartésiennes.

Avantageusement, les étapes jusqu'à l'étape de calcul du deuxième jeu de coordonnées sont réalisées avec une première résolution, et il est prévu une étape consistant à réduire la résolution avant l'étape d'envoi du deuxième jeu de coordonnées, afin d'envoyer le deuxième jeu de coordonnées selon une deuxième résolution, inférieure à la première résolution. Cette mise en œuvre permet de garder une bonne précision pendant les calculs, et d'envoyer le deuxième jeu de coordonnées selon un format qui ne nécessite pas beaucoup de temps de calcul pour la console de jeux ou de temps transmission entre le contrôleur et la console.

D'autres caractéristiques et avantages de la présente invention apparaîtront plus clairement à la lecture de la description détaillée qui suit de trois modes de réalisation de l'invention donnés à titre d'exemples nullement limitatifs et illustrés par les dessins annexés, dans lesquels :

- la figure 1 représente une vue en coupe d'un levier de commande d'un contrôleur de jeux vidéo, pour commander une position et/ou un déplacement d'un élément d'affichage généré sur un écran d'affichage par une console de jeux vidéo accouplée au contrôleur de jeux, par le procédé selon l'invention ;

- la figure 2 représente une première mise en œuvre du traitement de la position mesurée du levier de commande de la figure 1 effectué par le procédé selon l'invention ;

- la figure 3 représente une deuxième mise en œuvre du traitement de la position mesurée du levier de commande de la figure 1 effectué par le procédé selon l'invention ;

- les figures 4a et 4b représentent une troisième mise en œuvre du traitement de la position mesurée du levier de commande de la figure 1 effectué par le procédé selon l'invention ;

- la figure 5 représente le cas d'un levier de commande pouvant être déplacé dans une zone limitée par une butée mécanique de forme hexagonale.

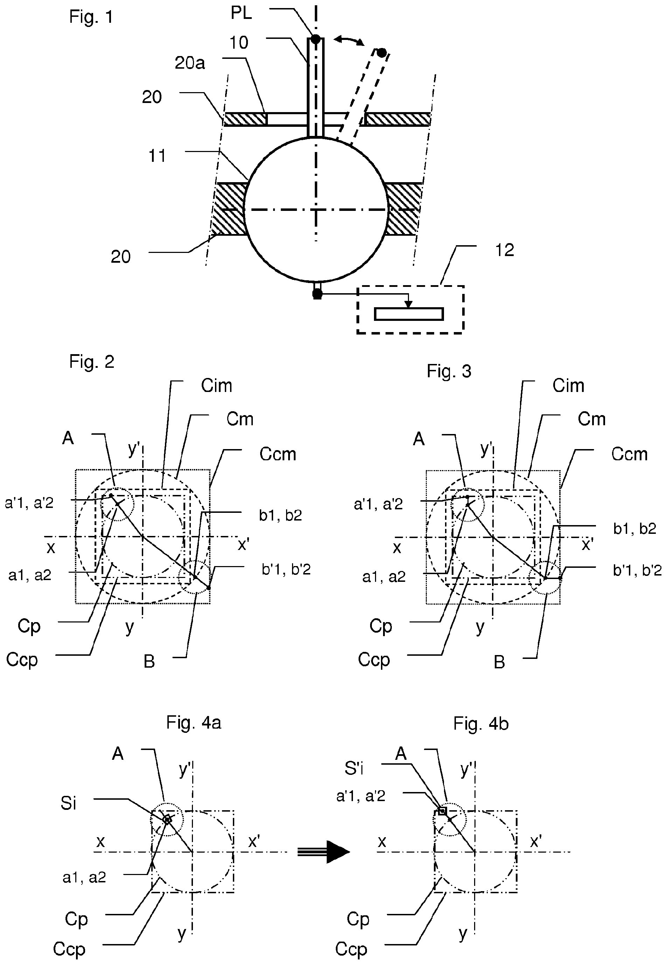

La figure 1 représente un levier de commande 10 d'un contrôleur de jeux. Un tel levier de commande 10 peut être également appelé "joystick" ou "stick". Typiquement, un tel levier de commande 10 est disposé sur une surface supérieure d'un contrôleur de jeux, pour pouvoir être actionné et déplacé par un utilisateur d'une console de jeux vidéo, pour provoquer par exemple un mouvement d'un personnage, un déplacement d'une mire de visée, ou encore un mouvement d'une caméra virtuelle d'un jeu vidéo.

De manière générale, le levier de commande 10 est donc mobile par rapport à un boîtier 20 du contrôleur de jeux vidéo, et peut être articulé par rapport au boîtier 20 selon une liaison rotule comme représenté figure 1. D'autres liaisons entre le levier de commande 10 et le boîtier 20 sont possibles, comme par exemple une liaison qui ne permet qu'un mouvement plan du levier de commande 10.

Toutefois, le levier de commande 10 ne peut être déplacé que dans une zone de déplacement prédéfinie, et limitée par une butée circulaire 20a. Dans le cas représenté, la butée 20a est une arête du boîtier 20, formant un trou par lequel le levier de commande 10 passe au travers du boîtier 20. La description qui suit est donc liée à une forme circulaire de la butée mécanique, et d'autres formes de butée sont possibles et seront évoquées après la description de ce mode particulier. Afin de détecter les mouvements du levier de commande 10, ce dernier est relié à au moins un capteur de position 12, tel qu'un potentiomètre. Un tel capteur de position 12 permet de détecter les mouvements du levier de commande 10, et donc de calculer par exemple une position d'un point PL du levier de commande 10.

Dans le cas présent, le levier de commande 10 peut être déplacé ici selon deux degrés de liberté, si bien que l'on peut bien entendu prévoir deux capteurs de position, ou un seul capteur de position avec deux pistes de mesure pour mesurer avec précision toutes les positions que le levier de commande 10 peut occuper.

La butée 20a est un cercle (bien entendu, comme mentionné ci-dessus, d'autres géométries de butée sont possibles : polygone, octogone hexagone, ellipse), et si on projette les positions du point PL dans un plan de base, perpendiculaire au levier de commande lorsque ce dernier est en position de repos (comme représenté figure 1 en traits pleins), les positions projetées sont toutes contenues dans un cercle de butée Cm visible figures 2 ou 3. Le plan de base peut être incliné à quelques degrés d'un plan perpendiculaire au levier de commande lorsque ce dernier est en position de repos, et alors la projection de la butée mécanique circulaire sera une ellipse dans ce plan incliné.

En effet, on voit figures 2 et 3 le cercle de butée Cm, qui est la limite du déplacement du levier de commande 10. De manière conventionnelle, on comprend que lorsque le levier de commande 10 est en butée, alors le contrôleur de jeu doit envoyer à la console de jeux l'information que l'intensité du déplacement est maximale lorsque le levier de commande 10 est en butée.

Cependant, le mouvement du levier de commande 10 est limité par un cercle, mais la console de jeu doit recevoir une position du levier de commande 10 sous la forme d'un jeu de coordonnées cartésiennes, et la norme d'un vecteur entre l'origine du repère cartésien et la position projetée dans le plan de base doit être maximale.

Dans le repère cartésien (x-x' ; y-y') représenté figures 2 et 3, lorsque le levier de commande 10 est en butée vers le haut, selon une diagonale à 45°, le signal envoyé à la console doit être à pleine échelle, donc les coordonnées cartésiennes sont alors par exemple (1, 1). Cependant, si on trace un carré inscrit Cim dans le cercle Cm, et si le levier de commande 10 est déplacé vers le haut hors du carré inscrit Cim, et toujours dans le cercle Cm sans être en butée, il faudrait encore augmenter la coordonnée selon l'axe y'-y, mais cela fausserait l'interprétation faite par la console car la norme du vecteur entre l'origine et la position projetée dans le plan de base serait supérieure à celle du vecteur lorsque le levier de commande 10 est en butée sur la diagonale.

En conséquence, il y aurait une incohérence de l'intensité du déplacement restitué par la console : intensité 1 lorsque la position projetée du levier de commande est sur la diagonale à 45° et sur le cercle Cm (levier de commande 10 en butée à 45°), et intensité supérieure lorsque la position projetée du levier de commande est hors du carré inscrit Cim, mais pas sur le cercle Cm (levier de commande 10 pas en butée).

Afin d'éviter cette incohérence, dès que la position projetée du levier commande 10 sort du carré inscrit Cim, une des coordonnées cartésiennes est imposée à 1, ce qui revient à ignorer quatre zones de déplacement, qui sont des quartiers de disques définis par les zones du cercle de butée Cm qui sont hors du carré inscrit Cim.

On comprend que lors d'un déplacement du levier de commande 10 selon une direction cardinale (la position projetée est donc sur un des axes yy' ou xx'), alors on atteint la pleine échelle dès que la position projetée est sur ou dépasse le carré inscrit Cim.

Afin de remédier à cet inconvénient, et pour prendre en compte toute la zone de déplacement du cercle de butée Cm, l'invention propose de calculer le jeu de coordonnées qui sera envoyé à la console de jeux en faisant une homothétie à partir de la position projetée du levier de commande dans le plan de base.

La figure 2 représente une première mise en œuvre de ce calcul, dans deux cas de figure.

Dans le premier cas de figure, le levier de commande est dans la position A, et la position projetée dans le plan base a pour coordonnées (a1, a2). Dans un premier temps, on détermine un cercle de positions Cp, qui passe par la position projetée de coordonnées (a1, a2), et qui est centré sur la position de repos du levier de commande (l'origine du repère (xx', yy')).

Ensuite, le procédé détermine un carré circonscrit Ccp au cercle de positions Cp, et détermine le point d'intersection du rayon passant par la position projetée de coordonnées (a1, a2) avec le carré circonscrit Ccp, qui a pour coordonnées (a'1, a'2).

Ce sont les coordonnées (a'1, a'2) qui seront envoyées à la console de jeux. Pour les calculer, on détermine la longueur du rayon R1 du cercle de positions qui passe par le point (a1, a2), grâce au théorème de Pythagore (équation 1). Et ensuite, on détermine la longueur R2 du segment qui a pour extrémités l'origine du repère et le point de coordonnées (a'1, a'2) grâce au théorème de Thalès (équation 2).

## Équation 1

$$R1 = \sqrt{(a1^2 + a2^2)}$$

## Équation 2

$$R2 = (a1^2 + a2^2)/a2$$

Il reste ensuite à multiplier chaque coordonnée du premier jeu de coordonnées (a1, a2) par le rapport R2/R1 pour trouver les coordonnées du deuxième jeu de coordonnées (a'1, a'2).

Le procédé effectue donc une homothétie basée sur une différence de dimension entre le cercle de positions Cp et son carré circonscrit Ccp. On "augmente" ou on "déplace" artificiellement la position projetée vers le carré circonscrit Ccp, pour trouver le deuxième jeu de coordonnées. Il s'agit ici d'une projection selon la direction radiale.

Il est à noter que le deuxième jeu de coordonnées est égal au premier jeu de coordonnées lorsque le levier de commande est déplacé uniquement sur une direction cardinale (le long de l'axe xx' ou yy') : l'homothétie est alors de rapport 1. Par ailleurs, le rapport d'homothétie est maximal lorsque le levier de commande 10 est déplacé le long d'une diagonale : le rapport est alors de 1.414 environ, c'est-à-dire racine carrée de 2.

En conséquence, la console reçoit bien un second jeu de coordonnées cartésiennes, avec la pleine échelle uniquement lorsque le levier de commande est en butée, et cela sans ignorer de zone de mesure.

La position B de la figure 2 représente justement le levier de commande 10 en butée, et les coordonnées de la position projetée sont (b1, b2), située sur le cercle de butée Cm. La transformation revient à calculer la projection de la position projetée sur le carré circonscrit Ccm selon la direction radiale qui passe par la position projetée, pour calculer le deuxième jeu de coordonnées (b'1, b'2) qui seront envoyées à la console.

Le procédé selon l'invention peut effectuer les étapes de détermination du cercle de positions Cp, du carré circonscrit Ccp et de projection à chaque mesure de la position du levier de commande 10 pour calculer le deuxième jeu de coordonnées avec le rapport d'homothétie, ou bien on peut bâtir une table prédéfinie en calculant le rapport d'homothétie pour toutes les positions possibles, stocker cette table prédéfinie dans le contrôleur de jeu et simplement chercher le rapport adéquat en fonction d'une position mesurée, et multiplier les coordonnées mesurées par le rapport adéquat pour trouver le deuxième jeu de coordonnées. On peut en alternative stocker directement le deuxième jeu de coordonnées dans la table prédéfinie.

La figure 3 représente une première alternative. Dans cette alternative, la détermination du cercle de positions Cp et du carré circonscrit Ccp sont identiques. Cependant, au lieu de projeter la position projetée selon la direction radiale, le procédé effectue une seule projection parallèle à l'un des axes xx' ou yy', et en particulier vers le côté du carré circonscrit qui est le plus proche, pour trouver le deuxième jeu de coordonnées cartésiennes à envoyer à la console de jeux.

En particulier, dans le cas de figure où le levier de commande 10 est dans la position A, la position projetée a pour premier jeu de coordonnées (a1, a2). Le côté du carré circonscrit Ccp le plus proche est le côté supérieur horizontal, si bien que les coordonnées du deuxième jeu de coordonnées seront (a'1, a'2), avec :

$$a'1 = a1$$

$$a'2 = \sqrt{(a1^2 + a2^2)}$$

Dans le cas où le levier de commande 10 est dans la position B (en butée), la position projetée (sur le cercle Cm donc) a pour premier jeu de coordonnées (b1, b2), et le côté du carré circonscrit Ccm le plus proche est le côté vertical droit, donc la projection de la position projetée sur le carré circonscrit Ccm aura pour deuxième jeu de coordonnées (b'1, b'2) avec :

$$b'1 = \sqrt{(b1^2 + b2^2)}$$

$$b'2 = b2$$

Les figures 4a et 4b représentent une troisième mise en œuvre possible pour déterminer le deuxième jeu de coordonnées cartésiennes à envoyer à la console de jeux.

Dans cette mise en œuvre, le cercle de butée Cm et son carré circonscrit ne sont pas représentés, pour ne pas surcharger les figures. En effet, toute la surface du cercle de butée Cm est découpée en secteurs angulaires Si. Un seul est visible figure 4a, et c'est celui qui comprend la position projetée du levier de commande 10 en position A. Le secteur angulaire en question Si est une portion de couronne délimitée latéralement (ou angulairement) par deux droites qui passent par le centre du repère (la position de repos du levier de commande 10). Toute la surface du cercle de butée Cm est découpée par des secteurs angulaires, si bien qu'il est possible d'identifier pour chaque position projetée du levier de commande un secteur angulaire particulier qui la contient.

Pour chaque secteur angulaire, il est possible de définir un point de référence contenu dans ce secteur angulaire, un cercle de positions Cp qui passe par ce point de référence et un carré circonscrit Ccp à ce cercle de référence. Il est alors possible de déterminer la projection du point de référence sur le carré circonscrit Ccp, selon la direction radiale, et déterminer un coefficient multiplicateur comme étant le rapport des longueurs du segment reliant la projection du point de référence (sur le carré circonscrit Ccp) à l'origine, et du rayon du cercle de positions. Ceci pour chaque secteur angulaire Si.

En conséquence, pour chaque point élément d'un secteur angulaire Si particulier, il est possible de multiplier ses coordonnées du premier jeu de coordonnées par le coefficient multiplicateur propre à ce secteur, pour calculer le deuxième jeu de coordonnées. Comme le montre la figure 4b, on projette avec le même coefficient multiplicateur tous les points du secteur angulaire Si vers un secteur angulaire S'i, sensiblement carré.

En d'autres termes, le procédé effectue un traitement par lots ou par secteurs angulaires pour limiter les calculs à effectuer, en s'aidant d'une table de coefficients multiplicateur qui est stockée dans le contrôleur de jeu, et qui donne en fonction du secteur angulaire Si qui contient la position projetée la valeur du coefficient multiplicateur à utiliser.

Bien entendu, s'il y a deux dimensions, le coefficient multiplicateur comprend deux valeurs, une pour chaque dimension.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un premier jeu de coordonnées, et il n'est pas précisé dans quel format se trouve ce premier jeu de coordonnées. L'invention peut fonctionner avec un premier jeu de coordonnées cylindriques, sphériques, ou même cartésiennes.

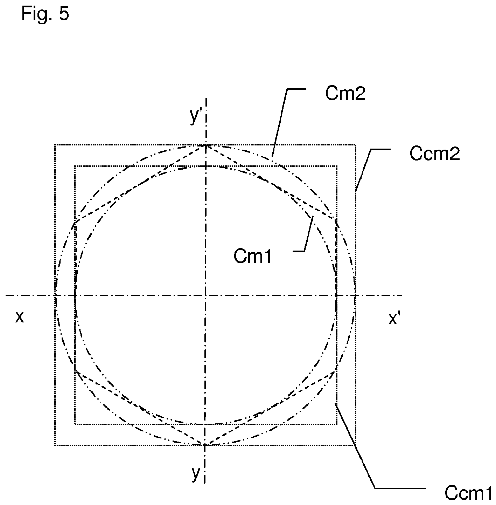

Comme mentionné ci-dessus, le cas d'une butée mécanique de forme circulaire a été traité en détail, mais on peut envisager par exemple le cas d'une butée mécanique de forme hexagonale, comme le montre la figure 5. La méthode est identique, avec une projection de la position du levier sur un plan de base, puis une détermination d'un cercle de positions qui passe par la position projetée du levier de commande, puis la projection de la position projetée sur un carré circonscrit au cercle de positions.

Cependant, lorsque le levier de commande est en butée mécanique sur le boîtier il ne peut aller plus loin que la forme hexagonale représentée figure 5. Dans le cas où le levier de commande est déplacé sur l'axe xx' seulement, il entre en butée rapidement avec le boîtier, et un premier cercle de positions Cm1 peut être déterminé, ainsi qu'un premier carré circonscrit Ccm1. Dans le cas où le levier de commande est déplacé sur l'axe yy' seulement, il peut être déplacé plus loin avant d'entrer en butée avec le boîtier (au niveau d'un sommet de l'hexagone), et un deuxième cercle de positions Cm2 peut être déterminé, ainsi qu'un deuxième carré circonscrit Ccm2.

Comme le deuxième carré circonscrit Ccm2 présente une taille supérieure au premier carré circonscrit Ccm1, il existe une distorsion dans le jeu de deuxième coordonnées obtenues, qui présente naturellement une norme supérieure quand le levier entre en butée mécanique au niveau d'un sommet (deuxième carré circonscrit Ccm2) plutôt qu'au milieu d'un côté (premier carré circonscrit Ccm1). Cependant, cette distorsion est introduite par la forme de la butée mécanique, et non par la méthode de la présente invention.

On peut aussi remarquer que le levier de commande ne peut aller jusqu'aux sommets de la forme polygonale de la butée mécanique (car le levier de commande présente un diamètre qui arrivera en butée sur les deux côtés formant le sommet par intersection), ce qui revient seulement à "arrondir" les sommets de l'hexagone représenté pour obtenir les positions possibles du levier de commande en butée. La méthode avec projection sur le plan de base, détermination du cercle de positions, du carré circonscrit et projections reste identique.

## Revendications

1. Procédé de contrôle d'une position et/ou d'un déplacement d'un élément d'affichage généré sur un écran d'affichage par une console de jeux vidéo accouplée à un contrôleur de jeux comprenant un levier de commande (10) agencé pour être déplacé selon au moins deux degrés de liberté dans une zone déterminée par un utilisateur, le procédé comprenant les étapes consistant à :

   - mesurer une position du levier de commande (10) dans la zone déterminée avec au moins un capteur (12) donnant en sortie au moins un signal électrique par degré de liberté,
   - projeter dans un plan de base la position du levier de commande (10) mesurée avec ledit au moins un capteur (12), pour déterminer un premier jeu de coordonnées,
   - déterminer un cercle de positions (Cp), centré sur une position de repos du levier de commande (10) et passant par la position projetée du levier de commande (10) dans le plan de base,
   - déterminer un carré circonscrit (Ccp) au cercle de positions (Cp),
   - projeter sur le carré circonscrit (Ccp) au moins une coordonnée du premier jeu de coordonnées,
   - calculer un deuxième jeu de coordonnées dans un repère cartésien, sur la base de la projection de ladite au moins une coordonnée du premier jeu de coordonnées sur le carré circonscrit (Ccp), de sorte à pouvoir envoyer à la console le deuxième jeu de coordonnées cartésiennes qui est une image du premier jeu de coordonnées.

**2.** Procédé de contrôle selon la revendication précédente, dans lequel l'étape de projection de ladite au moins une coordonnée du premier jeu de coordonnées sur le carré circonscrit (Ccp) comprend une étape consistant à déterminer un point de position projetée comme étant un point d'intersection d'un axe portant un rayon du cercle de positions (Cp), passant par la position projetée, avec le carré circonscrit (Ccp).

**3.** Procédé de contrôle selon la revendication 1, dans lequel l'étape de projection de ladite au moins une coordonnée du premier jeu de coordonnées sur le carré circonscrit (Ccp) comprend une étape consistant à projeter sur le carré circonscrit (Ccp) la position projetée, selon une direction de projection définie par un rayon du cercle de positions (Cp), passant par la position projetée.

**4.** Procédé de contrôle selon la revendication 2 ou 3, dans lequel l'étape de calcul du deuxième jeu de coordonnées cartésiennes comprend :

- une étape consistant à calculer une première longueur comme étant une longueur d'un segment reliant le centre du cercle de positions (Cp) à la position projetée,
- une étape consistant à calculer une deuxième longueur comme étant une longueur d'un segment reliant le centre du cercle de positions (Cp) au point de position projetée,
- une étape consistant à multiplier chaque coordonnée du premier jeu de coordonnée par un facteur défini par un ratio de la deuxième longueur sur la première longueur.

**5.** Procédé de contrôle selon la revendication 1, dans lequel l'étape de projection de ladite au moins une coordonnée du premier jeu de coordonnées sur le carré circonscrit (Ccp) comprend au moins une étape consistant à projeter la position projetée sur le carré circonscrit (Ccp), selon une direction de projection définie par un axe d'un repère orthonormé.

**6.** Procédé de contrôle selon la revendication 1 ou 5, dans lequel l'étape de projection de ladite au moins une coordonnée du premier jeu de coordonnées sur le carré circonscrit (Ccp) comprend :

- une seule étape consistant à projeter sur le carré circonscrit (Ccp) la position projetée, selon une première direction de projection définie par un axe d'un repère orthonormé définissant la plus courte distance entre la position projetée et le carré circonscrit (Ccp), pour définir un point de projection unique.

**7.** Procédé de contrôle selon la revendication précédente, dans lequel le deuxième jeu de coordonnées cartésiennes est défini par les coordonnées cartésiennes du point de projection unique.

**8.** Procédé de contrôle d'une position et/ou d'un déplacement d'un élément d'affichage généré sur un écran d'affichage par une console de jeux vidéo accouplée à un contrôleur de jeux comprenant un levier de commande (10) agencé pour être déplacé selon au moins deux degrés de liberté dans une zone déterminée par un utilisateur, le procédé, comprenant les étapes consistant à :

- mesurer une position du levier de commande (10) dans la zone déterminée avec au moins un capteur (12) donnant en sortie au moins un signal électrique par degré de liberté,
- projeter dans un plan de base la position du levier de commande (10) mesurée avec ledit au moins un capteur (12), pour déterminer un premier jeu de coordonnées,
- déterminer un secteur angulaire comprenant la position projetée du levier de commande (10), parmi une pluralité de secteurs angulaires prédéfinis du plan de base, chaque secteur angulaire comprenant au moins un point de référence par lequel passe un cercle de référence centré sur une position de repos du levier de commande (10),
- déterminer un carré de référence circonscrit au cercle de référence,
- déterminer au moins un coefficient multiplicateur défini en fonction du secteur angulaire déterminé sur la base d'une projection du point de référence sur le carré de référence circonscrit,
- calculer un deuxième jeu de coordonnées en multipliant chaque coordonnée du premier jeu de coordonnées avec ledit au moins un coefficient multiplicateur, de sorte à pouvoir envoyer à la console le deuxième jeu de coordonnées cartésiennes qui est une image du premier jeu de coordonnées.

**9.** Procédé de contrôle selon la revendication précédente, dans lequel chaque secteur angulaire de la pluralité de secteurs angulaires prédéfinis est défini par l'intersection de deux droites passant par la position de repos avec deux cercles centrés sur la position de repos, de sorte à découper et couvrir toute la surface des projections possibles de la position du levier de commande (10) dans le plan de base.

10. Procédé de contrôle selon l'une des revendications 1 à 7, dans lequel les étapes consistant à déterminer le cercle de positions (Cp), déterminer le carré circonscrit (Ccp) au cercle de positions (Cp), projeter sur le carré circonscrit (Ccp) ladite au moins une coordonnée, et à calculer le deuxième jeu de coordonnées dans un repère cartésien sont effectuées de manière préalable pour toutes les positions projetées possibles du levier de commande (10) dans le plan de base, de sorte à définir une table prédéfinie de conversion du premier jeu de coordonnées vers le deuxième jeu de coordonnées.

11. Procédé de contrôle selon la revendication précédente, dans lequel ladite table prédéfinie de conversion comprend en entrée le premier jeu de coordonnées, et donne en sortie un coefficient à multiplier avec chaque coordonnée du premier jeu de coordonnées, pour calculer le deuxième jeu de coordonnées.

12. Procédé de contrôle selon la revendication 10, dans lequel ladite table prédéfinie de conversion comprend en entrée le premier jeu de coordonnées, et donne en sortie le deuxième jeu de coordonnées.

13. Procédé de contrôle selon l'une des revendications précédentes, comprenant une étape consistant à envoyer à la console de jeu le deuxième jeu de coordonnées cartésiennes.

14. Procédé de contrôle selon la revendication précédente, dans lequel les étapes jusqu'à l'étape de calcul du deuxième jeu de coordonnées sont réalisées avec une première résolution, et dans lequel il est prévu une étape consistant à réduire la résolution avant l'étape d'envoi du deuxième jeu de coordonnées, afin d'envoyer le deuxième jeu de coordonnées selon une deuxième résolution, inférieure à la première résolution.

15. Procédé de contrôle selon l'une des revendications précédentes, dans lequel la position et/ou le déplacement de l'élément d'affichage généré sur l'écran d'affichage est modifiée sur la base du deuxième jeu de coordonnées cartésiennes.

**Patentansprüche**

1. Verfahren zur Kontrolle einer Position und/oder einer Verschiebung eines auf einem Bildschirm erzeugten Anzeigeelements durch eine Videospielkonsole, die mit einem Spielecontroller gekoppelt ist, welcher einen Steuerhebel (10) umfasst, der so angeordnet ist, dass er in mindestens zwei Freiheitsgraden innerhalb eines durch einen Benutzer festgelegten Bereichs bewegt werden kann, wobei das Verfahren die folgenden Schritte umfasst:

- Messen einer Position des Steuerhebels (10) in dem festgelegten Bereich mit mindestens einem Sensor (12), welcher pro Freiheitsgrad mindestens ein elektrisches Signal ausgibt,
- Projizieren der mit dem mindestens einen Sensor (12) gemessenen Position des Steuerhebels (10) in eine Grundebene, um einen ersten Koordinatensatz zu bestimmen,
- Bestimmen eines Positionskreises (Cp), der auf eine Ruheposition des Steuerhebels (10) zentriert ist und durch die projizierte Position des Steuerhebels (10) in der Grundebene verläuft,
- Bestimmen eines in dem Positionskreis (Cp) umgrenzten Quadrats (Ccp),
- Projizieren mindestens einer Koordinate des ersten Koordinatensatzes auf das umgrenzte Quadrat (Ccp),
- Berechnen eines zweiten Koordinatensatzes in einem kartesischen Bezugssystems auf der Grundlage der Projektion dieser mindestens einen Koordinate des ersten Koordinatensatzes auf das umgrenzte Quadrat (Ccp), damit der zweite kartesische Koordinatensatz, der ein Abbild des ersten Koordinatensatzes ist, an die Konsole gesendet werden kann.

2. Kontrollverfahren nach dem vorstehenden Anspruch, wobei der Schritt des Projizierens der mindestens einen Koordinate des ersten Koordinatensatzes auf das umgrenzte Quadrat (Ccp) einen Schritt umfasst, der darin besteht, einen projizierten Positionspunkt als Schnittpunkt einer Achse, die einen Radius des Positionskreises (Cp) trägt, der durch die projizierte Position verläuft, mit dem umgrenzten Quadrat (Ccp) zu bestimmen.

3. Kontrollverfahren nach Anspruch 1, wobei der Schritt des Projizierens der mindestens einen Koordinate des ersten Koordinatensatzes auf das umgrenzte Quadrat (Ccp) einen Schritt umfasst, der darin besteht, die projizierte Position in einer Projektionsrichtung auf das umgrenzte Quadrat (Ccp) zu projizieren, die durch einen Radius des Positionskreises (Cp) definiert wird, welcher durch die projizierte Position verläuft.

4. Kontrollverfahren nach Anspruch 2 oder 3, wobei der Schritt des Berechnens des zweiten kartesischen Koordinatensatzes umfasst:

- einen Schritt des Berechnens einer ersten Länge als Länge eines Segments, das den Mittelpunkt des Positionskreises (Cp) mit der projizierten Position verbindet,
- einen Schritt des Berechnens einer zweiten Länge als Länge eines Segments, das den Mittelpunkt des Positionskreises (Cp) mit dem projizierten Positionspunkt verbindet,
- einen Schritt des Multiplizierens jeder Koordinate des ersten Koordinatensatzes mit einem Faktor, der durch ein Verhältnis der zweiten Länge zu der ersten Länge definiert wird.

5. Kontrollverfahren nach Anspruch 1, wobei der Schritt des Projizierens der mindestens einen Koordinate des ersten Koordinatensatzes auf das umgrenzte Quadrat (Ccp) mindestens einen Schritt umfasst, der darin besteht, die projizierte Position in einer Projektionsrichtung auf das umgrenzte Quadrat (Ccp) zu projizieren, die durch eine Achse eines orthonormierten Bezugssystems definiert wird.

6. Kontrollverfahren nach Anspruch 1 oder 5, wobei der Schritt des Projizierens der mindestens einen Koordinate des ersten Koordinatensatzes auf das umgrenzte Quadrat (Ccp) umfasst:

- einen einzelnen Schritt des Projizierens der projizierten Position in einer ersten Projektionsrichtung auf das umgrenzte Quadrat (Ccp), welche durch eine Achse eines orthonormierten Bezugssystems definiert wird, die den kürzesten Abstand zwischen der projizierten Position und dem umgrenzten Quadrat (Ccp) definiert, um einen einzigen Projektionspunkt zu definieren.

7. Kontrollverfahren nach dem vorstehenden Anspruch, wobei der zweite kartesische Koordinatensatz durch die kartesischen Koordinaten des einzigen Projektionspunktes definiert wird.

8. Verfahren zur Kontrolle einer Position und/oder einer Verschiebung eines auf einem Bildschirm erzeugten Anzeigeelements durch eine Videospielkonsole, die mit einem Spielecontroller gekoppelt ist, welcher einen Steuerhebel (10) umfasst, der so angeordnet ist, dass er in mindestens zwei Freiheitsgraden innerhalb eines durch einen Benutzer festgelegten Bereichs bewegt werden kann, wobei das Verfahren die folgenden Schritte umfasst:

- Messen einer Position des Steuerhebels (10) in dem festgelegten Bereich mit mindestens einem Sensor (12), welcher pro Freiheitsgrad mindestens ein elektrisches Signal ausgibt,
- Projizieren der mit dem mindestens einen Sensor (12) gemessenen Position des Steuerhebels (10) in eine Grundebene, um einen ersten Koordinatensatz zu bestimmen,
- Bestimmen eines Winkelsektors, der die projizierte Position des Steuerhebels (10) enthält, aus einer Vielzahl von vordefinierten Winkelsektoren der Grundebene, wobei jeder Winkelsektor mindestens einen Referenzpunkt enthält, durch den ein Referenzkreis verläuft, welcher auf eine Ruheposition des Steuerhebels (10) zentriert ist,
- Bestimmen eines in dem Referenzkreis umgrenzten Referenzquadrats,
- Bestimmen mindestens eines Multiplikationsfaktors, der in Abhängigkeit von dem Winkelsektor definiert wurde, welcher auf der Grundlage einer Projektion des Referenzpunktes auf des umgrenzte Referenzquadrate bestimmt wurde,
- Berechnen eines zweiten Koordinatensatzes durch Multiplizieren jeder Koordinate des ersten Koordinatensatzes mit dem mindestens einen Multiplikationsfaktor, damit der zweite kartesische Koordinatensatz, der ein Abbild des ersten Koordinatensatzes ist, an die Konsole gesendet werden kann.

9. Kontrollverfahren nach dem vorstehenden Anspruch, wobei jeder Winkelsektor der Vielzahl von vordefinierten Winkelsektoren durch den Schnittpunkt von zwei Geraden definiert wird, die durch die Ruheposition verlaufen, mit zwei Kreisen, die auf die Ruheposition zentriert sind, um die gesamte Fläche der möglichen Projektionen der Position des Steuerhebels (10) in der Grundebene auszuschneiden und zu bedecken.

10. Kontrollverfahren nach einem der Ansprüche 1 bis 7, wobei die Schritte des Bestimmens des Positionskreises (Cp), des Bestimmens des in dem Positionskreis (Cp) umgrenzten Quadrats (Ccp), des Projizierens der mindestens einen Koordinate auf das umgrenzte Quadrat (Ccp) und des Berechnens des zweiten Koordinatensatzes in einem kartesischen Bezugssystem für alle möglichen projizierten Positionen des Steuerhebels (10) in der Grundebene vorher durchgeführt werden, um eine vordefinierte Tabelle für die Umrechnung des ersten Koordinatensatzes in den zweiten Koordinatensatz zu definieren.

**11.** Kontrollverfahren nach dem vorstehenden Anspruch, wobei die vordefinierte Umrechnungstabelle als Eingabe den ersten Koordinatensatz umfasst und als Ausgabe einen Koeffizienten ergibt, der mit jeder Koordinate des ersten Koordinatensatzes zu multiplizieren ist, um den zweiten Koordinatensatz zu berechnen.

**12.** Kontrollverfahren nach Anspruch 10, wobei die vordefinierte Umrechnungstabelle als Eingabe den ersten Koordinatensatz umfasst und als Ausgabe den zweiten Koordinatensatz ergibt.

**13.** Kontrollverfahren nach einem der vorstehenden Ansprüche, umfassend einen Schritt des Sendens des zweiten kartesischen Koordinatensatzes an die Spielkonsole.

**14.** Kontrollverfahren nach dem vorstehenden Anspruch, wobei die Schritte bis zu dem Schritt des Berechnens des zweiten Koordinatensatzes mit einer ersten Auflösung durchgeführt werden und wobei ein Schritt vorgesehen ist, der darin besteht, die Auflösung vor dem Schritt des Sendens des zweiten Koordinatensatzes zu verringern, um den zweiten Koordinatensatz in einer zweiten Auflösung zu senden, die geringer als die erste Auflösung ist.

**15.** Kontrollverfahren nach einem der vorstehenden Ansprüche, wobei die Position und/oder Verschiebung des auf dem Bildschirm erzeugten Anzeigeelements auf der Grundlage des zweiten kartesischen Koordinatensatzes geändert wird.

## Claims

**1.** A method for monitoring a position and/or a displacement of a display element generated on a display screen by a video game console coupled to a game controller comprising a control lever (10) arranged to be moved in at least two degrees of freedom in an area delimited by a user, the method comprising the steps consisting of:

- measuring a position of the control lever (10) in the determined area with at least one sensor (12) outputting at least one electrical signal per degree of freedom,
- projecting into a base plane the position of the control lever (10) measured with said at least one sensor (12), to determine a first set of coordinates,
- determining a circle of positions (Cp), centered on a rest position of the control lever (10) and passing through the position of the control lever (10) projected into the base plane,
- determining a square (Ccp) circumscribed to the circle of positions (Cp),
- projecting onto the circumscribed square (Ccp) at least one coordinate of the first set of coordinates,
- calculating a second set of coordinates in a Cartesian coordinate system, based on the projection of said at least one coordinate of the first set of coordinates onto the circumscribed square (Ccp), so as to be able to send to the console the second set of Cartesian coordinates which is an image of the first set of coordinates.

**2.** The monitoring method according to the preceding claim, wherein the step of projecting said at least one coordinate of the first set of coordinates onto the circumscribed square (Ccp) comprises a step consisting of determining a point of projected position as being a point of intersection of an axis bearing a radius of the circle of positions (Cp), passing through the projected position, with the circumscribed square (Ccp).

**3.** The monitoring method according to claim 1, wherein the step of projecting said at least one coordinate of the first set of coordinates onto the circumscribed square (Ccp) comprises a step consisting of projecting onto the circumscribed square (Ccp) the projected position, along a direction of projection defined by a radius of the circle of positions (Cp), passing through the projected position.

**4.** The monitoring method according to claim 2 or 3, wherein the step of calculating the second set of Cartesian coordinates comprises:

- a step consisting of calculating a first length as being a length of a segment connecting the center of the circle of positions (Cp) to the projected position,
- a step consisting of calculating a second length as being a length of a segment connecting the center of the circle of positions (Cp) to the projected position point,
- a step consisting of multiplying each coordinate of the first set of coordinates by a factor defined by a ratio of the second length to the first length.

**5.** The monitoring method according to claim 1, wherein the step of projecting said at least one coordinate of the first set of coordinates onto the circumscribed square (Ccp) comprises at least one step consisting of projecting the projected position onto the circumscribed square (Ccp), along a direction of projection defined by an axis of an orthonormal coordinate system.

**6.** The monitoring method according to claim 1 or 5, wherein the step of projecting said at least one coordinate of the first set of coordinates onto the circumscribed square (Ccp) comprises:

- a single step consisting of projecting onto the circumscribed square (Ccp) the projected position, along a first direction of projection defined by an axis of an orthonormal coordinate system defining the shortest distance between the projected position and the circumscribed square (Ccp), to define a single projection point.

**7.** The monitoring method according to the preceding claim, wherein the second set of Cartesian coordinates is defined by the Cartesian coordinates of the single projection point.

**8.** A method for monitoring a position and/or a displacement of a display element generated on a display screen by a video game console coupled to a game controller comprising a control lever (10) arranged to be moved in at least two degrees of freedom in an area delimited by a user, the method comprising the steps consisting of:

- measuring a position of the control lever (10) in the determined area with at least one sensor (12) outputting at least one electrical signal per degree of freedom,
- projecting into a base plane the position of the control lever (10) measured with said at least one sensor (12), to determine a first set of coordinates,
- determining an angular sector comprising the projected position of the control lever (10), among a plurality of predefined angular sectors of the base plane, each angular sector comprising at least one reference point through which a reference circle centered on a rest position of the control lever (10) passes,
- determining a reference square circumscribed to the reference circle,
- determining at least one multiplying coefficient defined as a function of the angular sector determined based on a projection of the reference point on the circumscribed reference square,
- calculating a second set of coordinates by multiplying each coordinate of the first set of coordinates with said at least one multiplying coefficient, so as to be able to send to the console the second set of Cartesian coordinates which is an image of the first set of coordinates.

**9.** The monitoring method according to the preceding claim, wherein each angular sector of the plurality of predefined angular sectors is defined by the intersection of two straight lines passing through the rest position with two circles centered on the rest position, so as to cut and cover the entire surface of the possible projections of the position of the control lever (10) into the base plane.

**10.** The monitoring method according to any of claims 1 to 7, wherein the steps consisting of determining the circle of positions (Cp), determining the square (Ccp) circumscribed to the circle of positions (Cp), projecting onto the circumscribed square (Ccp) said at least one coordinate, and calculating the second set of coordinates in a Cartesian coordinate system are carried out beforehand for all the possible positions of the control lever (10) projected into the base plane, so as to define a predefined conversion table from the first set of coordinates to the second set of coordinates.

**11.** The monitoring method according to the preceding claim, wherein said predefined conversion table comprises as input the first set of coordinates, and outputs a coefficient to be multiplied with each coordinate of the first set of coordinates, to calculate the second set of coordinates.

**12.** The monitoring method according to claim 10, wherein said predefined conversion table comprises as input the first set of coordinates, and outputs the second set of coordinates.

**13.** The monitoring method according to any of the preceding claims, comprising a step consisting of sending to the game console the second set of Cartesian coordinates.

**14.** The monitoring method according to the preceding claim, wherein the steps up to the step of calculating the second set of coordinates are carried out with a first resolution, and wherein a step consisting of reducing the resolution before the step of sending the second set of coordinates is provided, in order to send the second set of coordinates according to a second resolution, lower than the first resolution.

15. The monitoring method according to any of the preceding claims, wherein the position and/or the displacement of the display element generated on the display screen is/are modified based on the second set of Cartesian coordinates.

Fig. 1

PL

10

20a

20

11

20

12

Fig. 2

Cim

Cm

A          y'          Ccm

a'1, a'2

b1, b2

x                    x'

a1, a2                    b'1, b'2

Cp

Ccp          y          B

Fig. 3

Cim

Cm

A          y'          Ccm

a'1, a'2

b1, b2

x                    x'

a1, a2          b'1, b'2

Cp

Ccp          y          B

Fig. 4a

A          y''

Si

x                    x'

a1, a2

Cp

Ccp          y'

Fig. 4b

A          y''

S'i

a'1, a'2

x                    x'

Cp

Ccp          y'

Fig. 5

**EP 3 500 914 B1**

## RÉFÉRENCES CITÉES DANS LA DESCRIPTION

### Documents brevets cités dans la description

- EP 2450776 A1
- EP 0823271 A1